# EUROPEAN PATENT APPLICATION

(11) **EP 4 607 079 A1**
(43) Date of publication of application: **27.08.2025**
(21) Application number: 24218884.5
(22) Date of filing: 10.12.2024
(51) Int. Cl.: F16M 11/20, F16M 11/16, F16M 13/02, H04N 5/64

(54) **JOINT ASSEMBLY FOR A MONITOR MOUNT AND THE MONITOR MOUNT**

(30) Priority: 20.02.2024 CN 202420315504 U
(71) Applicant: Ningbo Tuotuo River Design Company, Ningbo City, Zhejiang Province (CN)
(72) Inventor: Wang, Zhimin, NINGBO (CN); Liu, Yijun, NINGBO (CN)
(74) Representative: Schrell, Andreas

(57) **Abstract**

A joint assembly suitable for a monitor mount including a first joint, a second joint rotationally connected to the first joint; a limiting assembly provided on the first joint, wherein the limiting assembly comprises a limiting component, which has a first position that limits the second joint to rotate within a preset angle range relative to the first joint and a second position that releases the second joint from the limit; wherein the rotating assembly is rotatably arranged on the outer periphery of the first joint and is interlinked with the limiting component. Under the action of an external force, the rotating assembly drives the limiting component to switch between the first position and the second position.

## Description

### Technical Field

The present disclosure relates to the technical field of monitor mounts, specifically to a joint assembly for a monitor mount and a monitor mount.

### Background

When the monitor mount is mounted against a wall or partition, if the fixed arm of the mount can rotate 360°, it is easy for the monitor mount to hit the wall or partition during the adjustment of the fixed arm. Therefore, a rotation-limiting structure is usually set on the base to limit the rotation of the fixed arm that fits with the base. For example, it may only rotate 180°. This can prevent the monitor mount from hitting the wall or partition when rotating the fixed arm.

In the existing technology, external screws or built-in parts are usually set on the base of the monitor mount for limiting, but external screws can affect the appearance and overall integrity of the mount, and the option of built-in parts requires disassembling the base and plugging/unplugging the parts, which is cumbersome to operate.

### Summary

The present disclosure aims to provide the joint assembly for a monitor mount and the monitor mount and solve the problem in the existing technology that it is difficult for the limiting component of the monitor mount to balance the overall appearance and the convenience at the same time.

In order to achieve the above objective, this disclosure provides a joint assembly for a monitor mount. The j oint assembly for the monitor mount includes a first j oint, a second joint rotationally connected to the first joint, a limiting assembly provided on the first joint comprising a limiting component, which has a first position that limits the second joint to rotate within a preset angle range relative to the first joint and a second position that releases the second joint from the limit; and a rotating assembly, which is rotatably arranged on the outer periphery of the first joint and is linked with the limiting component. Under the action of an external force, the rotating assembly drives the limiting component to switch between the first position and the second position.

Further, the limiting component is movably provided along the axis of the first j oint; one end of the limiting component abuts the rotating assembly so that the rotating assembly interlinks with the limiting component. At the first position, the other end of the limiting component extends out of the first j oint to limit and cooperate with the second joint.

Further, the rotating assembly includes an operation component, which is set on the outer periphery of the first joint; the operation component is arranged with an abutting component on its side facing the limiting component that abuts the limiting component to the first position and a releasing component that releases the limiting component to the second position. An inclined surface with progressively decreasing height is provided between the abutting component and the releasing component. The operation component drives the abutting component and releasing component to be rotatably provided up around the axis of the first joint, enabling the limiting component to abut against either the abutting component or releasing component.

Further, on the abutting component, there is also an abutting surface that makes contact with the limiting component. Along the circumferential direction of the first j oint, one end of the inclined surface extends to the abutting surface, and the other end of the inclined surface extends to the releasing component.

Further, along the circumferential direction of the first joint, the relative sides of the abutting surface are both provided with an inclined surface.

Further, multiple abutting components are arranged at intervals around the axis of the first joint.

Further, the joint assembly for the monitor mount also includes a rotation-stopping component, the rotation-stopping component includes a rotation-stopping groove, and at least one rotation-stopping protrusion. When the abutting component abuts the limiting component, the rotation-stopping protrusion matches the rotation-stopping groove, one of the first joints and the operation component is provided with the rotation-stopping groove, and the other is provided with a rotation-stopping protrusion.

Further, the limiting assembly further includes an elastic component located at the outer periphery of the limiting component. One end of the elastic component abuts the limiting component, and the other end abuts the first joint. The elastic component is used to provide the limiting component with a force facing away from the second joint.

Further, multiple limiting assemblies are provided at intervals around the axis of the first joint, or there is at least one arc-shaped limiting groove provided on the second joint, and the arc-shaped limiting groove fits with the limiting part by sliding.

According to another aspect of this disclosure, it provides a monitor mount comprising a base, one or more arm assemblies, and the above-mentioned joint assembly for a monitor mount that is used for connecting two adjacent arm assemblies and/or for connecting the base to the arm assemblies.

By applying the technical scheme of this disclosure, a joint assembly for the monitor mount is provided between the base and the arm assembly: the first joint is connected to the base, and the second joint is connected to the arm assembly. The base is fixed on the desktop. Through the interlinking setting between the rotating assembly and the limiting component, when it is necessary to limit the rotation range of the arm assembly, the rotating assembly is rotated by external force, causing it to drive the limiting component to move to the first position. This enables the limiting component to fit with the second joint to restrict movement, thereby allowing the second j oint to rotate relative to the first j oint within a predefined range, thereby preventing the monitor mount and the monitor from colliding with the partition or wall. When it is necessary to remove the restriction on the rotation range of the arm assembly, the rotating component is rotated by an external force, which drives the limiting component to move to the second position, allowing the limiting component to be released from the interlink with the second joint and allowing the second joint to rotate 360° relative to the first joint. In this way, by setting up the rotating component on the outer periphery of the first joint to regulate the rotation range of the arm assembly, not only can it avoid installing an external screw on the base while achieving rotation limiting so that the overall appearance of the monitor mount is enhanced, but it can also avoid the need to disassemble the base and plug/unplug the parts and increase the convenience of operating rotation limiting.

### Brief Description of the Drawings

The accompanying drawings of the specification that constitute a part of the present application are used to provide a further understanding of the present disclosure. The exemplary embodiments of the present disclosure and the descriptions thereof are used to explain the present disclosure and do not constitute an improper limitation on the present disclosure. In the accompanying illustrations:
Fig. 1 shows a schematic structural view of a monitor mount according to the present disclosure;
Fig. 2 shows an exploded view of the monitor mount structure according to Fig. 1;
Fig. 3 shows an enlarged view of part A of the monitor mount in Fig. 2;
Fig. 4 shows an exploded view of the joint assembly structure for the monitor mount (wherein the second j oint is not shown);
Fig. 5 shows an enlarged view of part B of the joint assembly structure for the monitor mount in Fig. 4;
Fig. 6 shows a structural schematic view of the rotating assembly and limiting component of the joint assembly for the monitor mount in Fig. 4;
Fig. 7 shows a structural schematic view of the rotating assembly of the joint assembly for the monitor mount in Fig. 4 in one direction;
Fig. 8 shows a structural schematic view of the rotating assembly of the joint assembly for the monitor mount in Fig. 4 in the other direction;
Fig. 9 shows a structural schematic view of the joint assembly's limiting component for the monitor mount in Fig. 4 when it is in the first position;
Fig. 10 shows an enlarged view of part C of the joint assembly structure for the monitor mount in Fig. 9;
Fig. 11 shows a structural schematic view of the joint assembly's limiting component for the monitor mount in Fig. 4 when it is in the second position;
Fig. 12 shows an enlarged view of part D of the joint assembly structure for the monitor mount in Fig. 11.

The above-accompanying drawings have the following reference numerals:
10, first j oint; 11, joint main body; 12, ring-shaped cover; 13, ring-shaped sliding plate; 14, positioning bolt; 15, positioning component; 16, positioning groove; 17, second axis section; 18, limiting groove; 20, second joint; 21, arc-shaped limiting groove; 30, rotating assembly; 31, operation component; 32, abutting component; 33, releasing component; 41, limiting component; 42, Elastic component; 51, rotation-stopping groove; 52, rotation-stopping protrusion; 53, arc-shaped limiting platform; 60, base; 70, arm assembly.

### Detailed Description of the Embodiments

It should be noted that in the case of no conflict, embodiments in the present application and features in the embodiments may be combined with each other. The present disclosure will be described in detail below with reference to the accompanying drawings in conjunction with the embodiments.

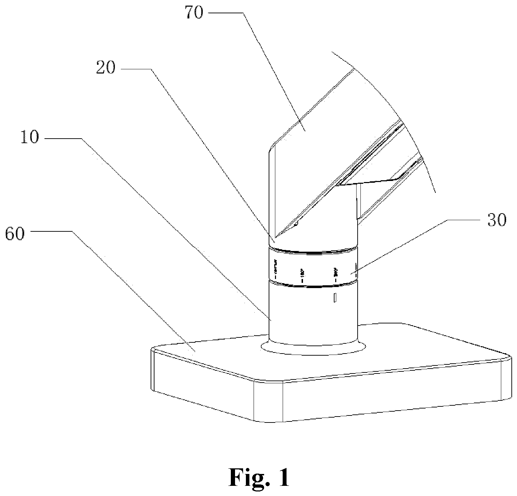

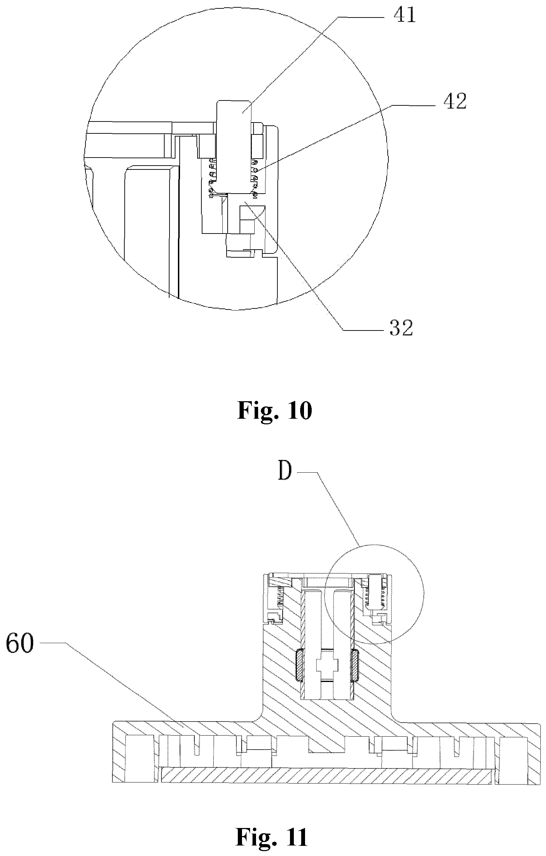

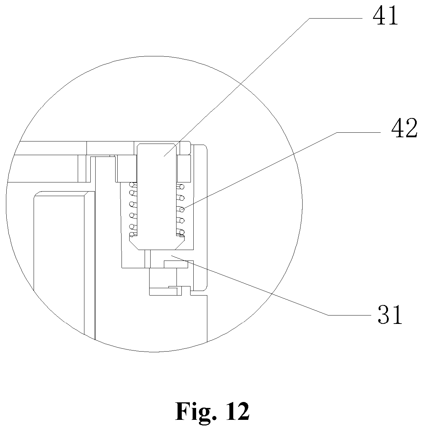

As is shown from Fig. 1 to Fig. 12, the present disclosure provides a joint assembly for a monitor mount and a monitor mount. The joint assembly for the monitor mount includes the first joint (10), second joint (20), limiting assembly, and rotating assembly (30). Specifically, the second joint (20) is rotationally connected with the first joint (10); the limiting assembly is provided on the first joint (10), and this limiting assembly includes a limiting component (41), which has a first position that limits the second joint (20) to rotate within a preset angle range relative to the first joint (10) and a second position that releases the second joint (20) from the limit; the rotating assembly (30) is rotatably arranged on the outer periphery of the first joint (10); the rotating assembly is interlinked with the limiting component (41). Under the action of external force, the rotating assembly (30) drives the limiting component (41) to switch between the first position and the second position.

In the above technical scheme, a joint assembly for the monitor mount is provided between the base (60) and the arm assembly (70). That is, the first joint (10) is connected to the base (60), the second joint (20) is connected to the arm assembly (70), and the base (60) is fixed on the desktop. Through the interlinking between the rotation assembly (30) and the limiting component (41), when it is necessary to limit the rotation angle range of the arm assembly (70), an external force rotates the rotation assembly (30), causing it to drive the limiting component (41) to move to the first position. This enables the limiting component (41) to cooperate with the second joint (20) to limit movement, thereby allowing the second joint (20) to rotate relative to the first joint (10) within a predefined range, thereby preventing the monitor mount and the monitor from colliding with the partition or wall. When it is necessary to remove the limit on the rotation range of the arm assembly (70), the rotating component (30) is rotated by an external force, which drives the limiting component (41) to move to the second position, allowing the limiting component (41) to be released from the cooperation with the second joint (20) and allowing the second joint (20) to rotate 360° relative to the first joint (10). In this way, by setting up the rotating assembly (30) on the outer periphery of the first joint (10) to regulate the rotation range of the arm assembly (70), not only can it avoid installing an external screw on the base while achieving rotation limiting so that the overall appearance of the monitor mount is enhanced, but it can also avoid the need to disassemble the base and plug/unplug the parts and increase the convenience of operating rotation limiting.

It should be noted that in the embodiments of this disclosure, the outer perimeter of the rotating assembly (30) is equipped with at least one angle mark, and the outer perimeter of the first joint (10) has a baseline mark. When the rotating assembly (30) rotates to a position where the baseline mark corresponds to a certain angle mark, it can limit the rotation angle range of the arm assembly (70) corresponding to the certain angle mark, that is, the limiting component (41) is in the first position. For example, if the angle mark is 180°, then when the baseline mark is aligned to 180°, the arm assembly (70) can rotate within the range of 0° to 180°.

Preferably, in the embodiments of the present disclosure, the angle mark is printed on the periphery of the rotating assembly (30) using silk printing; the baseline mark is printed on the periphery of the first joint (10) using silk printing.

Specifically, in the embodiments of the present disclosure, the limiting component (41) is a positioning pin.

It should be noted that in the embodiments of this disclosure, the preset angle range can be from 0° to 180°, or from 0° to 90°, and so on.

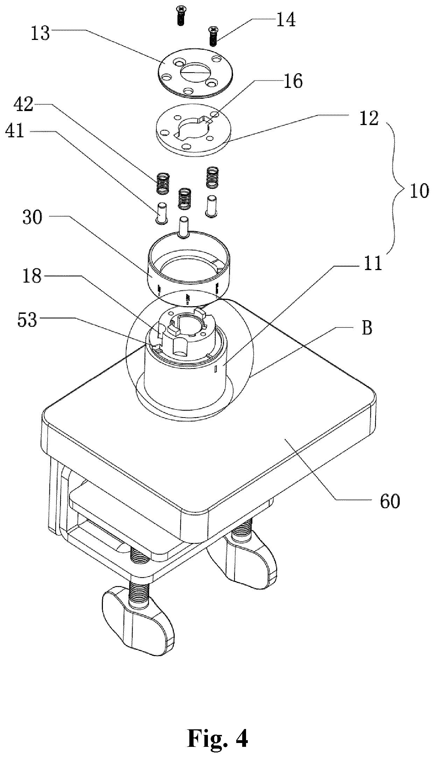

As shown in Fig. 4, in the embodiments of this disclosure, the limiting component (41) is movably arranged along the axis of the first joint (10); one end of the limiting component (41) abuts against the rotating assembly (30) so that the rotating assembly (30) and the limiting component (41) interlink. When at the first position, the other end of the limiting component (41) extends out from the first joint (10) to limit and cooperate with the second joint (20).

Through the above-mentioned setup, one end of the limiting component (41) abuts against the rotating assembly (30) to interlink. Thus, when rotating the rotating assembly (30), the limiting component (41) can be moved to the first position, and the other end of the limiting component (41) protrudes from the first joint (10) along the axis of the first joint (10) to limit and cooperate with the second joint (20). This enables the second joint (20) to rotate within a preset angle range. In this way, other external limiting parts can be avoided, thus enhancing the aesthetic completeness of the monitor mount. On the other hand, by rotating the rotating assembly (30), the rotation angle of the second joint (20) can be constrained, making the operation more convenient.

In one embodiment, the second joint (20) is set on the outer periphery of the first joint (10), and an arc-shaped limiting groove is set on the circumferential sidewall of the second joint (20). The limiting component (41) extends through the first joint (10) and arranged to be movable along the radial direction of the first joint (10), allowing the limiting component (41) to have a fitting position that fits and limits with the arc-shaped limiting groove on the second joint (20) and a releasing position that disengages from the arc-shaped limiting groove. One end of the limiting component (41) abuts against the rotating assembly (30) to enable it to link with the limiting component (41). Thus, when rotating the rotating assembly (30), the limiting component (41) can be moved to protrude radially from the first joint (10) to fit and limit with the arc-shaped limiting groove on the second joint (20), thereby enabling the second joint (20) to rotate within a preset angle range.

It should be noted that in the embodiment of this disclosure, the first joint (10) includes a joint main body (11) and a ring-shaped cover (12) that covers the joint main body (11). The ring-shaped cover (12) has a limiting hole corresponding to the limiting component (41). The limiting component (41) extends through the limiting hole to prevent itself from moving along the circumferential direction of the first joint (10). Furthermore, in the first position, one end of the limiting component (41) extends out of the limiting hole of the ring-shaped cover (12) to limit and fit with the second joint (20).

It should be noted that in the embodiment of this disclosure, the joint main body (11) includes a first axis section and a second axis section (17), the cross-sections of which successively decrease. The rotating assembly (30) is located on the outer circumference of the second axis section (17), and under the external force, the rotating assembly (30) can rotate relative to the second axis section (17). On the circumferential sidewall of the second axis section (17), there is a limiting groove (18) that limits and cooperates with the limiting component (41) to prevent the rotating assembly (30) from driving the limiting component (41) to rotate during its rotation, thereby enabling it to move linearly along the axis of the first joint (10).

Specifically, in the embodiment of this disclosure, the monitor mount with the joint assembly also includes a ring-shaped sliding plate (13) connected to the first joint (10). The ring-shaped sliding plate (13) is made of plastic, and along the axis of the first joint (10), the ring-shaped sliding plate (13) is located on the side of the ring-shaped cover (12) facing away from the joint main body (11). Part of the second joint (20) successively extends through the ring-shaped sliding plate (13) and the ring-shaped cover (12) to rotate and cooperate with the joint main body (11). In addition, there is a concession hole provided on the ring-shaped sliding plate (13) corresponding to the limiting component (41). At the first position, the limiting component (41) successively extends through the limiting hole and the concession hole to limit the second joint (20). In this way, when the second joint (20) rotates relative to the first joint (10), friction between the ring-shaped cover (12) and the second joint (20) can be avoided to prevent wear and tear of the ring-shaped cover (12) and/or the second joint (20).

Specifically, in the embodiment of this disclosure, the monitor mount with the joint assembly also includes two positioning bolts (14). The ring-shaped sliding plate (13) has two first mounting holes corresponding to the two positioning bolts (14), and the ring-shaped cover (12) has two second mounting holes corresponding to the two positioning bolts (14). The second axis section (17) has two third mounting holes that match the threads of the two positioning bolts (14). The two positioning bolts successively extend through the corresponding first mounting holes, and the corresponding second mounting holes, and cooperate with the corresponding third mounting holes, thus securing the ring-shaped sliding plate (13) and the ring-shaped cover (12) to the joint main body (11).

Specifically, in the embodiment of this disclosure, the second axis section (17) is equipped with an assembly hole for assembling part of the second joint (20) and a positioning component (15) located on the circumferential side of the assembly hole. The ring-shaped cover (12) has a concession hole for avoiding part of the second joint (20) and a positioning groove (16) connected to the concession hole. The positioning groove (16) and the positioning component (15) limit and cooperate with each other. In this way, during the installation process, it can prevent the ring-shaped cover (12) from moving relative to the second axis section (17) in its own circumferential direction, which facilitates installation.

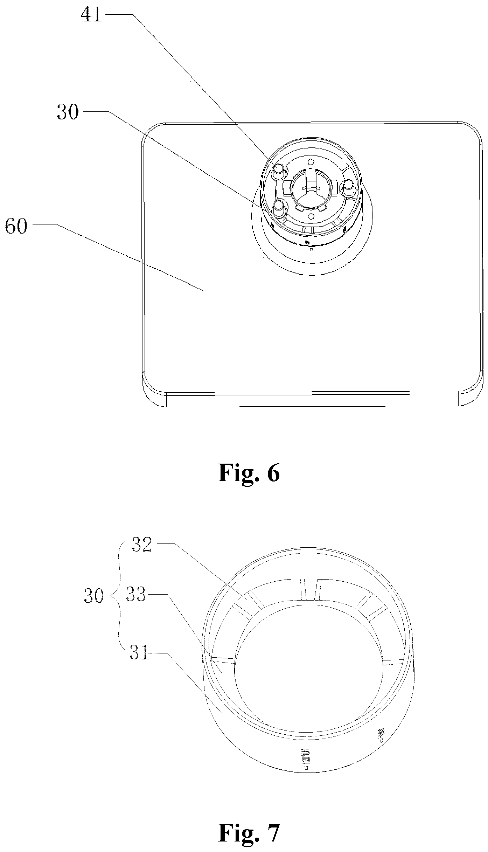

As shown in Fig. 7, in the embodiments of this disclosure, the rotating assembly 30 includes an operation component (31), which is sleeved around the outer periphery of the first joint (10). Towards the side of the limit component (41), the operation component (31) has an abutting component (32) that abuts the limiting component (41) to the first position and a releasing component (33) for releasing the limiting component (41) to the second position, and an inclined surface with gradually diminishing height is provided between the abutting component (32) and the releasing component (33). The operation component (31) drives the abutting component (32) and the releasing component (33) to be rotatably arranged around the axis of the first joint (10) so that the limiting component (41) can abut against either the abutting component (32) or the releasing component (33).

Through the above configuration, in the process of rotating the rotating assembly (30), when the limiting component (41) abuts the abutting component (32), the limiting component (41) is at the first position so that it can limit and cooperate with the second joint (20). When the limiting component (41) abuts the releasing component (33), the limiting component (41) is at the second position so that it can be released from its limiting engagement with the second joint (20). By providing an inclined surface, the rotation of the rotating assembly (30) relative to the limiting component (41) can be converted into its linear motion along the axis of the first joint (10) relative to the first joint (10). This can realize the switch between the abutment of the limiting component (41) with the abutting component (32) and with the releasing component (33), that is, the switch of the limiting component (41) between the first position and the second position.

Specifically, in the embodiment of this disclosure, the rotating assembly (30) includes a sleeve and an annular gasket connected to the inner circumferential wall of the sleeve. The annular gasket has a protruding segment and a flat segment, and the protruding segment forms the abutting component (32), the flat segment forms the releasing component (33), and the protruding segment and the flat segment are connected by an inclined surface.

As shown in Fig. 7, in the embodiment of this disclosure, an abutting surface for surface contact with the limiting component (41) is also provided on the abutting component (32). Along the circumferential direction of the first joint (10), one end of the inclined surface extends to the abutting surface, and the other end of the inclined surface extends to the releasing component (33).

In the above technical solution, by providing the abutting surface, the limiting component (41) can be more stable when it is at the first position, avoiding its movement relative to the abutting component (32).

As shown in Fig. 7, in the embodiment of the present disclosure, inclined surfaces are provided on both sides of the abutting surface along the circumference of the first joint (10). In this manner, when the rotating assembly (30) is rotated clockwise, the limiting component (41) can move along the axis of the first joint (10) toward or away from the second joint (20). When the rotating assembly (30) is rotated counter-clockwise, the limiting component (41) can move along the axis of the first joint (10) toward or away from the second joint (20). Therefore, the rotation angle range of the second joint (20) can be limited by rotating the rotating assembly (30) from two directions, thereby improving the convenience of adjusting the monitor mount.

As shown in Fig. 7, in the embodiment of this disclosure, there are multiple abutting components (32), which are arranged at intervals around the axis of the first joint (10). In this way, the rotation distance of the rotating assembly (30) can be shortened, which facilitates the rotation of the rotating assembly (30) to the position where the abutting component (32) abuts the limiting component (41). This further facilitates the protrusion of the limiting component (41) from the first joint (10) and the second joint (20) for limiting and fitting, thus realizing the convenient operation of switching the rotation angle range.

As shown in Fig. 4, in the embodiment of this disclosure, there are multiple limiting assemblies, which are arranged at intervals around the axis of the first joint (10).

In the above technical solution, by rotating the rotating assembly (30), at least one of the multiple abutting components (32) abuts against at least one of the multiple limiting components (41), thereby making the limiting components (41) at different positions in the circumferential direction of the first joint (10) separately or simultaneously limit and cooperate with the second joint (20) so that the second joint (20) has a variety of preset angle ranges that can be rotated relative to the first joint (10), and by rotating the rotating assembly (30), the rotation angle of the second joint (20) can be switched to any of the preset angle ranges.

Preferably, in the embodiment of this disclosure, the number of limiting assemblies and the abutting components (32) are both three, so the switch of three different rotation angle ranges can be realized. On the outer periphery of the first joint (10), three corresponding angle marks are arranged at intervals.

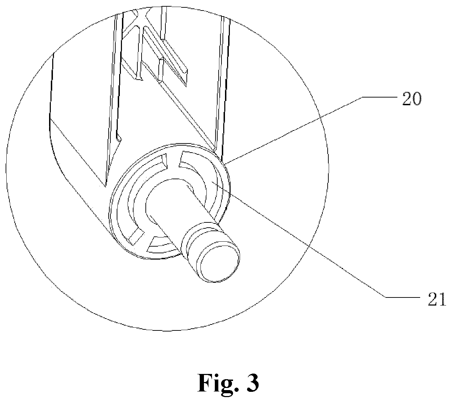

As shown in Fig. 3, in the embodiment of this disclosure, the second joint (20) is provided with at least one arc-shaped limiting groove (21), which is in sliding engagement with the limiting components (41).

In the above technical scheme, by setting the arc-shaped limiting groove (21), the limiting component (41) protruding from the first joint (10) can be limited to limit and cooperate with the arc-shaped limiting groove (21), thereby the rotation angle range of the second joint (20) can be determined according to the central angle corresponding to the arc-shaped limiting groove (21).

Preferably, in the embodiments of the present disclosure, there are multiple arc-shaped limiting grooves (21), which are arranged at intervals around the first joint (10), and each of them has a different central angle. This allows the limiting component (41) to limit and cooperate with any one of the arc-shaped limiting grooves (21), and thus, the second joint (20) can have multiple selectable preset angle ranges.

It should be noted that in the embodiments of the present disclosure, the quantity of the abutting components (32), the limiting assemblies, and the arc-shaped limiting grooves (21) can be adapted as needed to provide the number of selectable preset angle ranges. For example, the preset angle range at which the second joint (20) can rotate relative to the first joint (10) could be from 0° to 90°, or from 0° to 60°, etc.

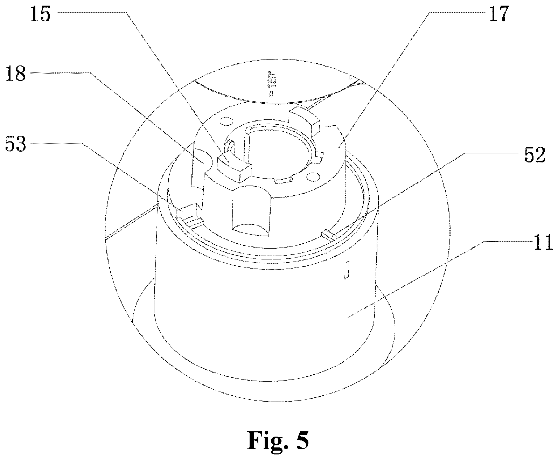

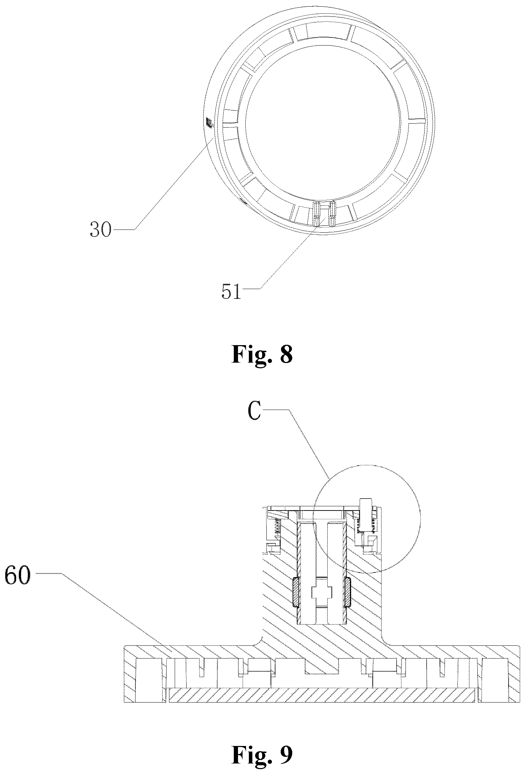

As shown in Fig. 5 and Fig. 8, in the embodiments of the present disclosure, the joint assembly for the monitor mount also includes a rotation-stopping component, which consists of a rotation-stopping groove (51) and at least one rotation-stopping protrusions (52). When the abutting component (32) abuts the limiting component (41), the rotation-stopping protrusions (52) engage with the rotation-stopping groove (51). One of the first joints (10) and the operation component 31 is provided with the rotation-stopping groove (51), and the other one is provided with the rotation-stopping protrusions (52).

Through the above setting, when the rotating assembly (30) rotates to a certain angle marker, the abutting component (32) abuts the limiting component (41), and at the same time, the rotation-stopping protrusion (52) interlinks with the rotation-stopping groove (51), causing the rotation of the rotating assembly (30) to block. In this way, the interlink of the rotation-stopping protrusion (52) with the rotation-stopping groove (51) can limit the rotation of the rotating assembly (30), causing the abutting component (32) to stop at the position where it abuts the limiting component (41) during rotation, thereby enabling better contact between the abutting component (32) and limiting component (41). On the other hand, it is possible to determine whether the abutting component (32) has reached the position where it abuts the limiting component (41) by the block of the rotation of the rotating assembly (30), thus helping to avoid excessive rotation of the rotating assembly (30).

Specifically, in the embodiments of the present disclosure, a rotation-stopping protrusion (52) is provided on the first axis section, and two protrusions are spaced on the side of the annular gasket of the rotating assembly (30) away from the second joint (20). The two protrusions are used to form a rotation-stopping groove (51).

In one embodiment, two protrusions are spaced on the first axis section, and the two protrusions are used to form a rotation-stopping groove (51). On the side where the annular gasket of the rotating assembly (30) is away from the second joint (20), the rotation-stopping protrusion (52) is provided.

It should be noted that in the embodiment of the present disclosure, an arc-shaped limiting platform (53) is also provided on the first axis section. The arc-shaped limiting platform (53) is located on the outer periphery of the second axis section (17), and the height of the arc-shaped limiting platform (53) from the bottom to the top in Fig. 4 is lower than the second axis section (17). The arc-shaped limiting platform (53) can limit and cooperate with the protrusion on the rotating assembly (30) so as to prevent the rotating assembly (30) from rotating 360° relative to the first joint (10).

As shown in Fig. 4, in the embodiment of the present disclosure, the limiting assembly also includes an elastic component (42) located on the outer periphery of the limiting component (41). One end of the elastic component (42) abuts against the limiting component (41), and the other end abuts against the first j oint (10). The elastic component (42) is used to provide a force to the limit component (41) facing away from the second joint (20). In this way, under the action of the elastic force, the limit component (41) can switch from the first position, where it abuts the abutting component (32), to the second position, where it abuts the releasing component (33).

Specifically, in the embodiment of the present disclosure, the elastic component (42) is a compression spring.

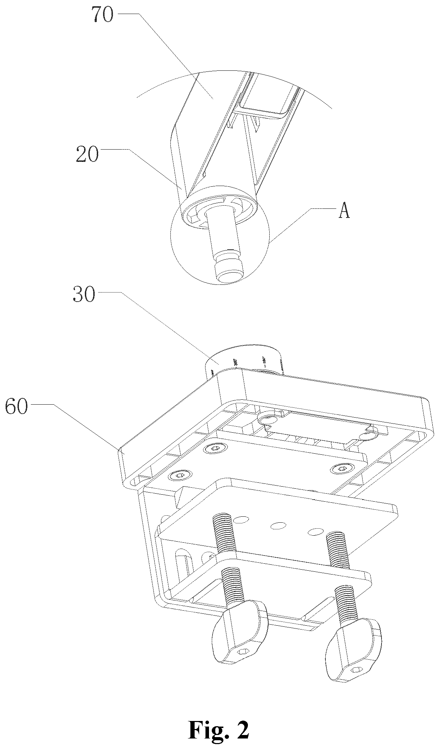

As shown in Fig. 1 and Fig. 2, an embodiment of the present disclosure provides a monitor mount that includes a base (60) and one or more arm assemblies (70); the monitor mount uses a joint assembly for connecting two adjacent arm assemblies (70) and/or for connecting the base (60) to the arm assemblies (70).

It should be noted that, in one embodiment, the monitor mount uses a joint assembly set between two arm assemblies (70). That is, one arm assembly (70) is connected to the first joint (10), and the other is connected to the second joint (20).

The monitor mount has all the advantages of the above-mentioned monitor mount with joint assembly, which will not be elaborated on here.

From the above description, it can be seen that the embodiments of the present disclosure achieve the following technical effects: the joint assembly for the monitor mount is provided between the base and the arm assemblies. That is, the first joint is connected to the base, and the second joint is connected to the arm assembly. The base is fixed on the desktop. Through the interlinking setting between the rotating assembly and the limiting component, when it is necessary to limit the rotation range of the arm assembly, the rotating assembly is rotated by external force, causing it to drive the limiting component to move to the first position. This enables the limiting component to cooperate with the second joint to restrict movement, thereby allowing the second j oint to rotate relative to the first j oint within a predefined range, preventing the monitor mount and the monitor from colliding with the partition or wall. When it is necessary to remove the limit on the rotation range of the arm assembly, the rotating component is rotated by an external force, which drives the limiting component to move to the second position, allowing the limiting component to be released from the interlink with the second joint and allowing the second joint to rotate 360° relative to the first j oint. In this way, by providing the rotating component on the outer periphery of the first joint to regulate the rotation range of the arm assembly, not only can it avoid installing an external screw on the base while achieving rotation limiting so that the overall appearance of the monitor mount is enhanced, but it can also avoid the need to disassemble the base and plug/unplug the parts and increase the convenience of operating rotation limiting.

The above descriptions are only preferred embodiments of the present disclosure but are not intended to limit the present disclosure. It will be apparent to those skilled in the art that various modifications and changes can be made in the present disclosure. Any modifications, equivalent substitutions, improvements, and the like made within the spirit and principle of the present disclosure shall be included within the protection scope of the present disclosure.

## Claims

1. A joint assembly for a monitor mount, comprising:
a first joint (10);
a second joint (20) rotationally connected to the first joint;
a limiting assembly provided on the first joint (10) comprising a limiting component (41), wherein the limiting component (41) has a first position that limits the second joint (20) to rotate within a preset angle range relative to the first joint (10) and a second position that releases the second joint (20) from the limit;
wherein the rotating assembly (30) is rotatably arranged on the outer periphery of the first joint (10) and is linked with the limiting component (41), wherein, under the action of an external force, the rotating assembly (30) drives the limiting component (41) to switch between the first position and the second position.

2. A joint assembly for a monitor mount according to claim 1, **characterized in that** the limiting part (41) is arranged to move along the axis of the first joint (10); wherein one end of the limiting part (41) abuts against the rotating assembly (30) such that the rotating assembly (30) is interlinked with the limiting component (41), and wherein, at the first position, the other end of the limiting component (41) extends out from the first joint (10) to limit the combination with the second joint (20).

3. A joint assembly for a monitor mount according to claim 2, **characterized in that** the rotating assembly (30) includes:
an operation component (31), which is located on the outer periphery of the first joint (10);
wherein the operation component (31) is arranged with an abutting component (32) on its side facing the limiting component (41) that abuts the limiting component (41) to the first position; and a releasing component (33) that releases the limiting component (41) to the second position, wherein an inclined surface with progressively decreasing height is provided between the abutting component (32) and the releasing component (33), wherein the operation component (31) drives the abutting component (32) and the releasing component (33) to be rotatably provided around the axis of the first joint (10), enabling the limiting component (41) to abut against either the abutting component (32) or the releasing component (33).

4. A joint assembly for a monitor mount according to claim 3, **characterized in that** an abutting surface is provided on the abutting component (32), which makes contact with the limiting component (41), wherein, along the circumferential direction of the first joint (10), one end of the inclined surface extends to the abutting surface and the other end of the inclined surface extends to the releasing component (33).

5. A joint assembly for a monitor mount according to claim 4, **characterized in that** the relative sides of the abutting surface are both provided with an inclined surface along the circumferential direction of the first joint (10).

6. A joint assembly for a monitor mount according to claim 3, **characterized by** multiple abutting components (32), which are arranged at intervals around the axis of the first joint (10).

7. Aj oint assembly for a monitor mount according to any one of claims 3 to 6, **characterized in that** the joint assembly for the monitor mount also includes a rotation-stopping component, which includes a rotation-stopping groove (51), and at least one rotation-stopping protrusion (52), wherein, when the abutting component (32) abuts limiting component (41), the rotation-stopping protrusion (52) matches the rotation-stopping groove (51), and wherein one of the first joint (10) and the operation component (31) is provided with the rotation-stopping groove (51) and the other is provided with a rotation-stopping protrusion (52).

8. A joint assembly for a monitor mount according to any one of claims 1 to 6, characterized that the limiting assembly further includes an elastic component (42) located at the outer periphery of the limiting component (41), wherein one end of the elastic component (42) abuts the limiting component (41) and the other end abuts the first joint (10), wherein the elastic component (42) is used to provide the limiting component (41) with a force facing away from the second joint (20).

9. A joint assembly for a monitor mount according to any one of claims 1 to 6, **characterized by** multiple limiting assemblies provided at intervals around the axis of the first joint (10), or by at least one arc-shaped limiting groove (21) provided on the second joint (20), wherein the arc-shaped limiting groove (21) cooperates with the limiting part (41) by sliding.

10. A monitor mount, comprising:
a base (60);
one or more arm assemblies (70);
a joint assembly for a monitor mount according to any one of claims 1 to 9, which is used for connecting two adjacent arm assemblies (70) and/or for connecting the base (60) to the arm assemblies (70).
